Europäisches Patentamt

European Patent Office

Office européen des brevets

(19)

(11) Veröffentlichungsnummer: **0 008 030**
**A1**

(12) # EUROPÄISCHE PATENTANMELDUNG

(21) Anmeldenummer: 79102597.6

(22) Anmeldetag: 23.07.79

(51) Int. Cl.³: **F 27 D 1/16,** C 04 B 35/66, C 21 C 5/44

(30) Priorität: 11.08.78 AT 5873/78

(43) Veröffentlichungstag der Anmeldung: 20.02.80
Patentblatt 80/4

(84) Benannte Vertragsstaaten: BE DE FR GB IT SE

(71) Anmelder: **Veitscher Magnesitwerke- Actien-Gesellschaft, Schubertring 10-12, A-1010 Wien (AT)**

(72) Erfinder: **Kraft, Wilfrid, Dipl.Ing.Dr.mont., Magnesitstrasse 6, A-8707 Leoben (AT)**
Erfinder: **Pfingstner, Walter, Magnesitstrasse 6, A-8707 Leoben (AT)**

(74) Vertreter: **Kliment, Peter, Dipl.-Ing., Singerstrasse 8, A-1010 Wien (AT)**

(54) **Verfahren zur Reparatur der feuerfesten Auskleidung industrieller Öfen und heissgehender Gefässe.**

(57) Verfahren zur Reparatur der feuerfesten Auskleidung industrieller Öfen und heißgehender Gefäße durch Aufbringen einer feuerfesten Masse unter Zusatz von Wasser, dadurch gekennzeichnet, daß dem der Masse zuzusetzenden Wasser ein Benetzungsmittel beigegeben wird.

EP 0 008 030 A1

ACTORUM AG

- 1 -

<u>Verfahren zur Reparatur der feuerfesten Auskleidung industrieller Öfen und heißgehender Gefäße.</u>

Die Erfindung betrifft ein Verfahren zur Reparatur der feuerfesten Auskleidung industrieller Öfen und heißgehender Gefäße durch Aufbringen einer feuerfesten Masse unter Zusatz von Wasser.

Wenn in der feuerfesten Ausmauerung von Öfen und Gefäßen, wie Flammöfen und Konverter zur Herstellung von Stahl oder von Nichteisenmetallen, Lichtbogenöfen, Gießpfannen, Glaswannenöfen, Schachtöfen, Drehöfen usw., im Zuge des Betriebes Stellen eines voreilenden Verschleißes aufgetreten sind, werden diese üblicherweise durch Aufbringen von feuerfesten Massen geeigneter Zusammensetzung auf das Mauerwerk, entweder im heißen Zustand oder nach dessen Erkalten, repariert. Man kann derartige Reparaturen auch durchführen, bevor noch ein nennenswerter Verschleiß eingetreten ist, und diese vorsorglichen Reparaturen während der ganzen Ofenreise in bestimmten Abständen wiederholen, um einen gleichmäßigen Verschleiß zu erzielen.

Für diese Reparaturen eignen sich Spritzmaschinen, die nach dem Düsenmischverfahren (auch Torkretieren oder Gunitieren genannt) arbeiten, wobei die feuerfeste Masse durch eine an die Spritzmaschine angeschlossene Lanze gezielt auf die Reparaturstelle aufgebracht wird. Auch Rotationsschleudern sind gebräuchlich, wobei die Masse mittels eines Schleuderrades oder -tellers auf die zu reparierenden Stellen aufgetreten wird. Bei beiden Maschinentypen wird die Masse, die neben dem feuerfesten Material noch Binde- Fluß- und Plastifizierungsmittel enthalten kann, in trockenem Zustand den Maschinen aufgegeben und wird in diesen bzw. vor dem Austritt aus der Spritzlanze oder dem Erreichen des Schleudertellers mit Wasser versetzt.

Bei diesen Reparaturvorgängen treten vor allem zwei Schwierigkeiten auf. Nach dem Austritt der Masse aus der Spritzmaschine oder dem Schleuderteller kommt es vielfach zu einer starken Staubentwicklung innerhalb des zu reparierenden Ofens, wodurch die Sicht erheblich behindert und ein gezieltes Reparieren der Bereiche des voreilenden Verschleißes sehr erschwert wird. Ferner zeigt sich oft, daß die Masse an der Reparaturstelle schlecht haftet und mehr oder weniger große Massemengen abprallen oder abfallen. Die schlechte Haftung kann durch die Zusammensetzung der Masse bedingt sein, welche in erster Linie auf Feuerfestigkeit und weniger auf Haftfähigkeit eingestellt sein muß. In vielen Fällen liegt der Grund für das schlechte Haften aber in einer ungenügenden Durchmischung der Masse mit Wasser.

Dem erstgenannten Nachteil, der Staubentwicklung, kann durch eine erhöhte Wasserzugabe begegnet werden. In vielen Fällen wird aber die Masse vor dem Durchmischen mit Wasser, also zumeist schon bei der Erzeugung, mit einem geringen Ölzusatz versehen, wodurch die Masseteilchen und insbesondere die für das Stauben vor allem verantwortlichen Feinstanteile zu größeren Partikeln agglomeriert werden. Der Ölzusatz ist aber insofern von starkem Nachteil, als dadurch die Benetzung der Masse durch Wasser deutlich verschlechtert wird; wobei zu bedenken ist, daß ja für die Durchmischung mit Wasser nur eine relativ kurze Zeitspanne von der Wasserzudüsung bis zum Austritt der Masse aus der Lanze oder Schleuder bzw. bis zum Auftreffen an der Reparaturstelle zur Verfügung steht. Um eine ausreichende Benetzung der mit Öl versetzten Masse zu gewährleisten, muß die Wasserzugabe erhöht werden. Dies kann jedoch dazu führen, daß ganze Massepartien abrutschen, insbesondere an vertikalen Ofenwänden. Die Verminderung der Verstaubung wird also oft durch eine schlechtere Haftung erkauft. Außerdem tritt beim Torkretieren oder Schleudern von ölversetzten Massen auf heiße Ausmauerungen ein Ölqualm auf, der ebenfalls die Sicht auf die zu reparierende Stelle stark behindert.

Aufgabe der Erfindung ist es, zwecks Vermeidung dieser Nachteile und im Interesse einer geringen Staubentwicklung, in der kurzen, vom Durchgang der Masse durch die Mischdüse bis zum Aufprall am Ofenmauerwerk zur Verfügung stehenden Zeit von etwa 1 bis 3 Sekunden eine möglichst vollständige Benetzung der Masse mit Wasser zu sichern, und zwar mit einer so geringen Wassermenge, daß die Gefahr eines schlechten Haftens und eines Abrutschens der aufgebrachten Masse weitgehend gebannt ist.

Wie Versuche ergeben haben, kann die bessere Benetzung durch herkömmliche, der trockenen Masse beigegebene Zusätze, wie z.B. Plastifizierungsmittel zur Erhöhung des Wasserhaltevermögens, nicht erreicht werden. Der Grund ist darin zu sehen, daß das benetzungsverbessernde Mittel in der zur Verfügung stehenden kurzen Zeit nicht vom Wasser gelöst werden kann. Es kann aber nur in gelöstem Zustand seine Wirkung entfalten, die Oberflächenspannung in dem aus feuerfestem Korn und Wasser bestehenden System herabzusetzen. Da ferner die Masse nur im trockenen Zustand angeliefert werden kann, müßten alle Masseteilchen von dem Benetzungsmittel umhüllt sein, damit dieses wirksam werden könnte. Dies ist jedoch bei festen Benetzungsmittel grundsätzlich unmöglich und bei einem flüssigen Mittel wegen der dann benötigten großen Menge praktisch nicht sinnvoll.

Nach der Erfindung wird die gestellte Aufgabe dadurch gelöst, daß dem der Masse zuzusetzenden Wasser ein Benetzungsmittel beigegeben wird. Das Benetzungsmittel, das in fester oder flüssiger Form eingesetzt werden kann, wird zweckmäßig vor der das Wasser zur Eindüsungsstelle fördernden Wasserpumpe, sofern vorhanden, zugemischt oder es kann durch einen Portionierer dem Wasserstrom zugegeben werden.

Da die verfügbare Zeit zur Lösung des Mittels im Wasser und die Mischzeit des Wassers mit der Masse, wie erwähnt, nur kurz sind, kommen nur intensiv wirkende Benetzungsmittel in Frage, die schon in geringer Konzentration wirksam werden. Als solche eignen sich besonders anionische grenzflächenaktive Ester; jedoch ist die Erfindung nicht auf den Einsatz dieser Ester als Benetzungsmittel beschränkt.

Die Benetzungsmittel können dem Wasser beispielsweise in einer Menge von 0,05 bis 0,5 Gew.-%, bezogen auf die zuzusetzende Wassermenge, beigegeben werden, wobei der Wasserzusatz zur Masse in einer Menge von 10 bis 16 Gew.-%, bezogen auf die trockene Masse, vorgenommen wird. Durch den Einsatz des Benetzungsmittels in dieser geringen Menge werden die Kosten niedrig gehalten und es wird auch eine gute Durchmischung von Netzmittel und Wasser in der verfügbaren Zeit erzielt.

Durch die erfindungsgemäße Zugabe eines Benetzungsmittels zum zuzudüsenden Wasser wird eine bessere Bindung des Staubanteils der Masse erreicht und damit die Staubentwicklung vermindert, wodurch die Sichtverhältnisse beim Reparaturvorgang verbessert werden. Ferner wird das Reparaturverfahren unempfindlicher hinsichtlich der Wasserdosierung, wobei im allgemeinen eine geringere Wassermenge ausreicht. Dadurch wird ein besseres Haften der auf die Reparaturstelle aufgebrachten Masse erreicht.

Die Anwendung des erfindungsgemäßen Verfahrens ist bei allen bekannten Reparaturmassen möglich. Als feuerfestes

Korn der Massen kommen die üblichen Grundmaterialien, wie Magnesia, Chromerz, Spinelle, Mullit, Schamotte, in Betracht, sowie die üblichen Zusätze, wie Ton, Eisenoxid, Kalkhydrat, und die gebräuchlichen Bindemittel, wie Phosphate, Sulfate, Chromate und Silicate (Wassergläser). Ein geringer Ölzusatz, der nach wie vor zur Verminderung eines Staubanfalles beim Füllen der Reparaturmaschinen der Masse beigegeben werden kann, stört bei erfindungsgemäßer Anwendurch eines Benetzungsmittels nicht.

- 1 -

Patentansprüche:

1. Verfahren zur Reparatur der feuerfesten Auskleidung industrieller Öfen und heißgehender Gefäße durch Aufbringen einer feuerfesten Masse unter Zusatz von Wasser, dadurch gekennzeichnet, daß dem der Masse zuzusetzenden Wasser ein Benetzungsmittel beigegeben wird.

2. Verfahren nach Anspruch 1, dadurch gekennzeichnet, daß dem der Masse zuzusetzenden Wasser als Benetzungsmittel anionische grenzflächenaktive Ester beigegeben werden.

3. Verfahren nach Anspruch 1 oder 2, dadurch gekennzeichnet, daß die Benetzungsmittel dem Wasser in einer Menge von 0,05 bis 0,5 Gew.-%, bezogen auf die zuzusetzende Wassermenge, beigegeben werden, wobei der Wasserzusatz zur Masse in einer Menge von 10 bis 16 Gew.-%, bezogen auf die trockene Masse, vorgenommen wird.

Europäisches
Patentamt

**EUROPÄISCHER RECHERCHENBERICHT**

0008030

Nummer der Anmeldung

EP 79 10 2597

| | **EINSCHLÄGIGE DOKUMENTE** | | **KLASSIFIKATION DER ANMELDUNG (Int.Cl. 3)** |
|---|---|---|---|
| Kategorie | Kennzeichnung des Dokuments mit Angabe, soweit erforderlich, der maßgeblichen Teile | betrifft Anspruch | |
| | US - A - 2 339 163 (W.V. FRIEDLAEN-DER) <br><br> * Patentanspruch 1; Seite 2, rechte Spalte, Zeilen 5-17 * <br><br> ---- | 1 | |
| | | | **RECHERCHIERTE SACHGEBIETE (Int. Cl. 3)** |

EPA Form 1503.2   06.78